# EUROPÄISCHE PATENTSCHRIFT

(11) **EP 2 516 975 B1**
(45) Veröffentlichungstag und Bekanntmachung des Hinweises auf die Patenterteilung: **16.10.2013**
(21) Anmeldenummer: 10801399.6
(22) Anmeldetag: 13.12.2010
(51) Int. Cl.: G01J 3/02, G01J 3/14

(54) **SPEKTROMETERANORDNUNG**
SPECTROMETER DEVICE
APPAREIL SPECTROMETRIQUE

(30) Priorität: 22.12.2009 DE 102009059280
(43) Veröffentlichungstag der Anmeldung: 31.10.2012
(73) Patentinhaber: Leibniz - Institut für Analytische Wissenschaften - ISAS - e.V., 44139 Dortmund (DE)
(72) Erfinder: FLOREK, Stefan, 12526 Berlin (DE); BECKER-ROSS, Helmut, Berlin 12557 (DE); OKRUSS, Michael, 14482 Potsdam (DE)
(74) Vertreter: Weisse, Renate
(86) Internationale Anmeldenummer: PCT/EP2010/069472
(87) Internationale Veröffentlichungsnummer: WO 2011/076598

(56) Entgegenhaltungen:
- EP-A1- 0 403 228
- DE-A1- 10 011 462
- BECKER-ROSS H ET AL: "Echelle spectrometers and charge-coupled devices", SPECTROCHIMICA ACTA, PART B: ATOMIC SPECTROSCOPY 1997 JUL 30 ELSEVIER SCI B.V., Bd. 52, Nr. 9-10, 1. Mai 1996 (1996-05-01) , Seiten 1367-1375, XP002632226, DOI: DOI:10.1016/S0584-8547(97)00024-4

## Beschreibung

### Technisches Gebiet

Die Erfindung betrifft eine Spektrometeranordnung enthaltend:
(a) eine Kollimatoroptik zur Erzeugung eines parallelen Strahlenbündels aus der in die Spektrometeranordnung eintretenden Strahlung,
(b) eine Dispersionsanordnung zur Dispersion eines aus der in die Spektrometeranordnung eintretenden Strahlung erzeugten parallelen Strahlenbündels in einer Querdispersionsrichtung, und
(c) ein Echelle-Gitter zur Dispersion der in die Spektrometeranordnung eintretenden Strahlung in einer Hauptdispersionsrichtung, wobei,
(d) die Dispersionsanordnung (16; 40) reflektierend ausgebildet ist, und
(e) die Dispensionsanordnung (16; 40) entlang des optischen Weges vor dem Echelle-Gitter (18; 46) derart angeordnet ist, dass das parallele Strahlenbündel in Richtung auf das Echelle-Gitter reflektiert wird.

Die Erfindung betrifft ferner ein Verfahren zur spektralen Zerlegung von Strahlung, mit den Schritten:
(a) Erzeugen eines parallelen Strahlenbündels mit einer Kollimatoroptik;
(b) Dispergieren der Strahlung an einem Echelle-Gitter in einer Hauptdispersionsrichtung; und
(c) Dispergieren der parallelen Strahlung an einer Dispersionsanordnung in einer Querdispersionsrichtung;
(d) wobei das parallele Strahlenbündel (24) durch die Dispersionsanordnung (16; 40) in Richtung auf das Echelle-Gitter (18; 46) reflektiert wird.

Bei einem Echelle-Spektrometer werden Gitter mit einem treppenartigen (Echelle (frz.) = Treppe) Querschnitt verwendet. Durch die stufenartige Struktur mit einem entsprechenden Blaze-Winkel wird ein Beugungsmuster erzeugt, welches die gebeugte Strahlung in hohen Ordnungen, z.B. in dreißigster bis einhundertster Ordnung konzentriert. Dadurch können hohe Werte für die Dispersion und das spektrale Auflösungsvermögen bei kompakter Anordnung erreicht werden. Die Ordnungen können sich - je nach einfallendem Wellenlängenbereich - überlagern. Die Ordnungen werden bei Echelle-Spektrometern mit interner Ordnungstrennung daher nochmals quer zur Dispersionsrichtung des Echelle-Gitters dispergiert, um die verschiedenen auftretenden Ordnungen in der Fokalfläche zu trennen. Man erhält so ein zweidimensionales Spektrum, das mit Flächendetektoren erfasst werden kann.

Ein Echelle-Spektrometer mit interner Ordnungtrennung unterscheidet sich von Echelle-Spektrometern mit externer Ordnungstrennung dadurch, daß bei den letztgenannten das Echelle-Gitter nur mit Strahlung aus einem schmalen Wellenlängenbereich beaufschlagt wird.

Bei Spektrometern mit interner Ordnungstrennung wird das Spektrum in Form einer zweidimensionalen Struktur auf dem Detektor erzeugt. Diese Struktur besteht im Wesentlichen aus parallel zueinander angeordneten, spektralen Abschnitten von jeweils der Größe eines freien Spektralbereichs des Echelle-Gitters. Die Verwendung eines Flächendetektors mit einer Vielzahl von Detektorelementen erlaubt die simultane Erfassung eines großen Wellenlängenbereichs mit hoher spektraler Auflösung (Spektrograph). Bei Verwendung des Spektrometers als Monochromator (Polychromator) wird Strahlung aus einem ausgewählten Wellenlängenbereich durch Drehung von Gitter und/oder Prisma auf einen Austrittsspalt oder einen Zeilendetektor im Bereich der Austrittsebene erfasst.

Die Querdispersion wird gewöhnlich so groß gewählt, dass die Ordnungen überall vollständig getrennt sind. Um dies über den gesamten Spektralbereich zu gewährleisten, gibt es spektrale Bereiche, bei denen zwischen den einzelnen Ordnungen ein nicht genutzter Zwischenraum entsteht. So entstehen bei Verwendung eines Prismas zur Querdispersion im kurzwelligen Spektralbereich aufgrund des Dispersionsverlaufes größere Zwischenräume als im längerwelligen Spektralbereich. Bei Verwendung eines Beugungsgitters zur Querdispersion ist es umgekehrt.

### Stand der Technik

DE 41 18 760 A1 offenbart einen Doppel-Echelle-Monochromator mit externer Ordnungstrennung. Das in den Monochromator eingestrahlte Licht wird über ein einen Konkavspiegel zu einem Prisma geleitet. Dort wird das Licht vordispergiert und im Wesentlichen in sich selbst in Richtung auf den Spiegel zurückgeleitet. Mit einem Zwischenspalt wird ein kleiner Spektralbereich ausgewählt, welcher in ein nachgeordnetes Echelle-Spektrometer eintritt. Über einen weiteren Konkavspiegel wird das Licht auf ein Echelle-Gitter geleitet. Die am Echelle-Gitter dispergierte Strahlung läuft ebenfalls im Wesentlichen in sich selbst zurück und wird mit einem geringen Winkel fast parallel zur einfallenden Strahlung auf einen Detektor reflektiert. Die Spiegel arbeiten bei der bekannten Anordnung in Autokollimation, d.h. der Kollimatorspiegel dient gleichzeitig als Kameraspiegel.

DE 40 21 159 A1 offenbart einen Echelle-Polychromator, bei dem Strahlung an einem Echelle-Gitter in einer Hauptdispersionsrichtung dispergiert wird und an einem davor angeordneten Prisma in einer Querdispersionsrichtung dispergiert wird. Dadurch entsteht in der Austrittsebene ein zweidimensionales Spektrum mit einer Vielzahl an nebeneinanderliegenden Ordnungen. Zur Vermeidung von Ordnungsüberlappung müssen die Spalthöhe des Eintrittsspalts und damit der Lichtleitwert stark begrenzt werden.

Es sind Anordnungen bekannt, mit denen Strahlung mehrfach über ein Echelle-Gitter geleitet wird, um eine höhere Auflösung zu erreichen:

DE 199 61 908 C2 offenbart einen Echelle-Monochromator in Littrow-Anordnung ohne Ordnungstrennung. Die durch einen Eintrittsspalt in den Monochromator eintretende Strahlung wird über einen Kollimatorspiegel auf ein Echelle-Gitter gelenk. Das Echelle-Gitter arbeitet in zwei Stellungen. In der ersten Stellung läuft die dispergierte Strahlung in Autokollimation zurück über den Spiegel zum Austrittsspalt. In der zweiten Stellung läuft die dispergierte Strahlung auf einen Planspiegel und wird von dort zurück auf das Echelle-Gitter reflektiert. Dort wird die Strahlung, ein weiteres Mal dispergiert und läuft dann erst in Autokollimation über den Spiegel zurück zum Detektor.

DE 103 47 862 B4 offenbart ein Echelle-Spektrometer, bei dem die an einem Echelle-Gitter dispergierte Strahlung unter einem kleinen Winkel zurück in Richtung des Eintrittsspalts geleitet wird. Eine Planspiegelanordnung, welche um den Eintrittsspalt herum angeordnet ist, lenkt die dispergierte Strahlung erneut zum Echelle-Gitter, so dass die Strahlung ein weiteres Mal dispergiert wird.

Bei den bekannten Echelle-Spektrometern in Autokollimations-Anordnungen wird die Strahlung entweder mehrfach über das Echelle-Gitter geführt, um das theoretische Auflösungsvermögen und die Winkeldispersion zu erhöhen oder es werden Prismen in Autokollimation benutzt, um durch die damit verbundene Faltung des Strahlengangs kompakte Anordnungen zu erreichen. Nachteilig ist dabei, dass der Lichtleitwert dieser Spektrometer bei Anordnungen mit interner Ordnungstrennung durch die geringe Spalthöhe stark eingeschränkt ist. Die geringste Ordnungstrennung im gesamten Spektralbereich bestimmt dabei den maximalen Wert für die zulässige Spalthöhe. Gegenüber Spektrometern mit Beugungsgittern in erster Ordnung entsteht ein typischer Verlust an Lichtleitwert um den Faktor 10 bis 50.

### Offenbarung der Erfindung

Es ist Aufgabe der Erfindung, ein kompaktes Spektrometer der eingangs genannten Art mit hoher Auflösung bei besonders hohem Lichtleitwert zu schaffen. Erfingdungsgemäß wird die Aufgabe dadurch gelöst, dass die Dispersionsanordnung reflektierend ausgebildet ist, und die Dispersionsanordnung in Bezug auf das Echelle-Gitter derart angeordnet ist, dass das parallele Strahlenbündel in Richtung auf das Echelle-Gitter reflektiert wird und die Dispersionsanordnung ein weiteres Mal durchläuft, und der abbildende Spiegel das reflektierte und dispergierte parallele Strahlenbündel fokussiert. Die Dispersionsanordnung kann beispielsweise von einer Anordnung mit einem Prisma gebildet sein, welches die Strahlung in Querdispersionsrichtung spektral zerlegt. Eine solche Prismenanordnung kann ein rückseitig verspiegeltes Prisma umfassen. Die Prismenanordnung kann aber auch ein Transmissionsprisma umfassen, hinter dem ein Planspiegel, ein reflektierendes Gitter oder ein weiteres rückseitig verspiegeltes Prisma angeordnet ist. Die Dispersionsanordnung kann statt einer Prismenanordnung eine Gitteranordnung oder eine Kombination aus Gitter und Prisma, ein sogenanntes Grism umfassen.

Bei einer solchen Anordnung kann die Strahlung durch einen Eintrittsspalt geleitet werden. Die divergente Strahlung trifft auf eine Kollimatoroptik, beispielsweise in Form einer achromatischen Linsenoptik oder eines Hohlspiegels. Ein solcher Spiegel kann ein off-axis Paraboloid, ein Toroid oder ein sphärischer Spiegel sein. Ein off-axis Paraboloid wird bevorzugt. An der Kollimatoroptik wird ein paralleles Strahlenbündel erzeugt. Dieses parallele Strahlenbündel wird auf eine reflektierende Dispersionsanordnung geleitet. Im einfachsten Fall ist eine solche Dispersionsanordnung ein rückseitig verspiegeltes Prisma. Das Prisma ist so angeordnet, dass die reflektierte und dispergierte Strahlung nicht in sich selbst zurückläuft, sondern unter einem Winkel in Richtung eines Echelle-Gitters gelenkt wird. Das Echelle-Gitter ist so angeordnet, dass es die Strahlung in einer anderen Richtung, der Hauptdispersionsrichtung, dispergiert. Die Hauptdispersionsrichtung kann insbesondere senkrecht zur Querdispersionsrichtung verlaufen. Dann entsteht ein zweidimensionales Spektrum in der Austrittsebene.

Wenn das Echelle-Gitter um eine Achse drehbar gelagert ist, die parallel zu den Gitterfurchen verläuft, kann eine ausgewählte Wellenlänge oder ein ausgewählter Wellenlängenbereich auf einen Austrittsspalt oder einen Detektor in der Austrittsebene gelenkt werden. Das Prisma kann um eine Achse drehbar gelagert sein, die parallel zur brechenden Kante verläuft. Dann können ausgewählte Ordnungen auf einen Austrittsspalt oder einen Detektor in der Austrittsebene gelenkt werden.

Der doppelte Durchgang am Prisma erlaubt die Erzeugung einer hohen Dispersion und damit großen Ordnungstrennung. Dies führt dazu, dass ein hoher Eintrittsspalt verwirklicht werden kann. Die Anordnung hat daher einen vergleichsweise hohen Lichtleitwert bei hoher Auflösung und nur wenigen optischen Komponenten.

Bei der Anordnung ist das Echelle-Gitter derart angeordnet, dass die dispergierte Strahlung zurück in Richtung auf die Dispersionsanordnung reflektiert wird. Die Anordnung arbeitet dann in Autokollimation. Unter einer Autokollimationsanordnung wird eine Anordnung verstanden, bei welcher die Kollimatoroptik gleichzeitig die Funktion der Kameraoptik übernimmt, indem der Strahl im Wesentlichen in sich selbst zurück reflektiert wird. Das vom Echelle-Gitter zurücklaufende, parallele Strahlenbündel durchläuft die Dispersionsanordnung ein weiteres Mal. Die dort erneut in Querdispersionsrichtung dispergierte Strahlung läuft zurück zur Autokollimationsoptik. Dort wird der Strahl in der Austrittsebene fokussiert.

Die Strahlung wird bei dieser Anordnung in Querdispersionsrichtung mehrfach dispergiert. Entsprechend werden die Ordnungen des Echelle-Spektrums besonders weit auseinandergezogen. Die ansonsten stark begrenzte Spalthöhe kann so sehr groß gewählt werden. Es wird ein Minimum an optischen Bauelementen benötigt. Das benötigte Materialvolumen des Prismas ist bei der Reflexionsanordnung und bei doppeltem Durchgang gegenüber einer Transmissionsanordnung um einen Faktor 4 verringert. Dies führt zu einer wesentlichen Kosteneinsparung insbesondere bei teuren, schlierenfreien Kristallmaterialien.

Die Dispersionsanordnung dient neben der Dispersion auch zur Trennung des einfallenden von dem reflektierten, parallelen Strahlbündel. Anders als bei bekannten Autokollimationsanordnungen läuft die Strahlung an dieser Dispersionsanordnung nicht in sich selbst zurück, sondern zunächst zum Echelle-Gitter. In einer besonders vorteilhaften Anordnung entsteht eine besonders hohe Abbildungsqualität, weil das Prisma in seiner Hauptebene ablenkt und dispergiert. Sie erfordert zudem nur wenige optische Bauteile, mit entsprechend geringen Transmissions- und Reflexionsverlusten. Durch Drehung um nur zwei Achsen kann das Spektrum unter Einhaltung optimaler Abbildungsbedingungen in die Bildebene fokussiert und positioniert werden. Dadurch wird die Anordnung leicht zu justieren und ist kostengünstig in der Herstellung.

Es versteht sich, dass die Reflexion an dem Echelle-Gitter direkt zurück zur Dispersionsanordnung erfolgen kann. Alternativ kann die Strahlung auch indirekt zunächst auf einen Spiegel, dann erneut über das Echelle-Gitter und erst dann zurück zur Dispersionsanordnung laufen.

In einer Ausgestaltung der Erfindung ist ein weiteres Echelle-Gitter vorgesehen und die Dispersionsanordnung ist von einer ersten in eine zweite Stellung bewegbar, denen jeweils ein Echelle-Gitter zugeordnet ist, in dessen Richtung die Strahlung reflektiert wird. Über eine einfache Drehung an der Dispersionsanordnung kann beispielsweise eines von zwei Echelle-Gittern ausgewählt werden. Jedes der Echelle-Gitter kann bezüglich seiner Dispersionseigenschaften an den jeweiligen Anwendungsfall angepasst sein. Es versteht sich, dass auch ein drittes oder weitere Echelle-Gitter vorgesehen sein können. Dann ist die Dispersionsanordnung in eine dritte oder weitere Stellungen bewegbar. Anstelle eines der beiden Echelle-Gitter kann auch ein Planspiegel vorgesehen sein. Bei entsprechender Drehung und Beleuchtung des Planspiegels wird auf dem Detektor ein eindimensionales Spektrum erzeugt. Dieses kann als Übersichtsspektrum dienen, wobei nach Drehung der Dispersionsanordnung bei Beleuchtung des Echelle-Gitters nachfolgend zweidimensionale Spektren mit hoher Auflösung abgebildet werden. Bei Verwendung eines Flächendetektors kann dabei das zweidimensionale Spektrum simultan ausgelesen werden. Die zweite Dimension des Flächendetektors kann im Falle der Beleuchtung des Planspiegels zur simultanen Registrierung der eindimensionalen Spektren verschiedener Strahlungsquellen oder zur ortsaufgelösten spektralen Messung einer Strahlungsquelle benutzt werden. Dieses ist auch bei Drehung der Dispersionseinrichtung der Fall, wenn die Strahlung von der Dispersionseinrichtung direkt zum Autokollimationsoptik zurück reflektiert und dispergiert wird.

Wenn das Echelle-Gitter drehbar angeordnet ist, kann ein weiteres Echelle-Gitter auf dessen Rückseite vorgesehen sein. Das weitere Echelle-Gitter kann unterschiedliche Eigenschaften, etwa eine unterschiedliche Strichzahl aufweisen. Statt Drehung des Prismas oder zusätzlich dazu kann auch das Echelle-Gitter um einen Winkel von beispielsweise 180° gedreht werden. Dann kommt das weitere Echelle-Gitter zum Einsatz.

In einer weiteren Ausgestaltung der Erfindung umfasst die Dispersionsanordnung ein auf der Rückseite verspiegeltes Prisma, das zusammen mit einem weiteren, auf der Rückseite verspiegelten Prisma auf einem Drehtisch montiert ist, so dass durch Drehen des Drehtisches eines der beiden Prismen auswählbar ist. Auf diese Weise kann durch Drehung des Drehtisches die Querdispersion ausgewählt werden. So können Prismen aus unterschiedlichem Material eingesetzt werden, welche unterschiedliche Wellenlängenabhängigkeit der Dispersion haben. Es können auch Prismen mit unterschiedlichem Prismenwinkel eingesetzt werden. Es können auch weitere reflektierend ausgebildete Dispersionsanordnungen wie Beugungsgitter oder Grisms in Kombination mit dem Prisma auf dem Drehtisch montiert sein. Die Drehachse dient dabei sowohl zur Auswahl der jeweiligen Querdispersionsanordnung, eines Echelle-Gitters oder eines Planspiegels als auch der Feinjustage des Spektrums auf dem Detektor.

In einer weiteren Ausgestaltung der Erfindung kann ein weiteres Prisma im Strahlengang angeordnet sein. Ein solches Prisma kann beispielsweise dazu dienen, den spektralen Verlauf der Querdispersion zusätzlich zu beeinflussen. Das weitere Prisma kann insbesondere zwischen der Dispersionsanordnung und dem Echelle-Gitter angeordnet sein.

Die Strahlung an der Dispersionsanordnung kann um einen geringen Winkel aus der Hauptebene heraus abgelenkt werden. Dann läuft der Strahl aus der Hauptebene heraus, so dass ein Detektor in der Austrittsebene oberhalb oder unterhalb eines Eintrittsspaltes angeordnet werden kann. Dabei werden die Strahlen des doppelten Durchgangs durch die Dispersionseinrichtung von den Strahlen des direkt reflektierten, einfachen Durchgangs in der Fokalfläche getrennt. Diese Anordnung dient dann vorzugsweise der Unterdrückung von Falsch- und Streulicht.

In einer besonderen Ausgestaltung der Anordnung befindet sich ein ortsauflösender Flächendetektor, z.B. ein CCD-Detektor, in der Fokalfläche. Im diesem Fall ist die Anordnung vorzugsweise ein hochauflösender Spektrograph. In einer zweiten Ausgestaltung befindet sich ein Zeilendetektor, oder auch ein Einzeldetektor, z.B. eine Fotodiode oder ein Sekundärelektronenvervielfacher (Fotomultiplier) in der Fokalebene. Im diesem Fall ist die Anordnung ein lichtstarker Monochromator. Je nach Eintrittsspaltbreite ist das apparatebedingte Auflösungsvermögen innerhalb weiter Grenzen einstellbar.

Bei einem erfindungsgemäßen Verfahren zur spektralen Zerlegung von Strahlung der eingangs genannten Art wird das parallele Strahlenbündel durch die Dispersionsanordnung in Richtung auf das Echelle-Gitter reflektiert und durchläuft die Dispersionsanordnung ein weiteres Mal, und die dispergierte und reflektierte Strahlung wird mit der gleichen Kollimatoroptik fokussiert. Dabei kann die dispergierte Strahlung vom Echelle-Gitter zurück in Richtung auf die Dispersionsanordnung reflektiert werden.

Die erfindungsgemäße Anordnung schafft in einer bevorzugten Ausgestaltung der Erfindung bei Beleuchtung mit einem Kontinuumsstrahler eine schmalbandige intensive monochromatische Lichtquelle mit extrem hohem Lichtleitwert. Die Verwendung einer solchen Anordnung aus Kontinuumsstrahler und Spektrometer ermöglicht die Durchstimmbarkeit über den gesamten Wellenlängenbereich ohne Wechsel der Lichtquelle.

Eine vorteilhafte Ausgestaltung der Erfindung ist die Verwendung der eingangs genannten Anordnung für die Analyse im VUV-Bereich. Dies wird begünstigt durch die geringe Größe des zu evakuierenden Volumens und minimale verluste bei wenig Reflexionen und hoher Transmission.

Zur Unterdrückung von parasitären Reflexionen am Littrow-Prisma können die Parameter Prismenmaterial und Ablenkwinkel verwendet werden. Diese werden so ausgewählt, dass Falschlicht nicht auf den Detektor gelangt.

Ausgestaltungen der Erfindung sind Gegenstand der Unteransprüche. Ein Ausführungsbeispiel ist nachstehend unter Bezugnahme auf die beigefügten Beispiele näher erläutert.

### Kurze Beschreibung der Zeichnungen

- Fig.1: zeigt eine Spektrometeranordnung mit einem Echelle-Gitter und einem reflektierende Prisma, welches parallele Strahlung in Richtung auf das Echelle-Gitter reflektiert.
- Fig.2: zeigt die Spektrometeranordnung aus Figur 1, bei welcher ein zusätzliches Prisma mit kleinerem Prismenwinkel als reflektierendes Prisma eingesetzt werden kann.
- Fig.3: zeigt eine Spektrometeranordnung, bei welcher zwischen zwei Echelle-Gittern und zwei Prismen ausgewählt werden kann.
- Fig.4: zeigt die Spektrometeranordnung aus Figur 3, bei welcher das zweite Prisma eingesetzt wird.
- Fig.5: zeigt die Spektrometeranordnung aus Figur 3, bei welcher das zweite Echelle-Gitter eingesetzt wird.
- Fig.6: zeigt die Spektrometeranordnung aus Figur 3, bei welcher sich das Prisma in eine Autokollimationsposition ohne Einsatz eines Echelle-Gitters befindet.
- Fig.7: zeigt die Spektrometeranordnung ohne Einsatz eines Echelle-Gitters analog zu Figur 6, bei dem die Strahlung mittels eines Planspiegels erneut über das Prisma geleitet wird.

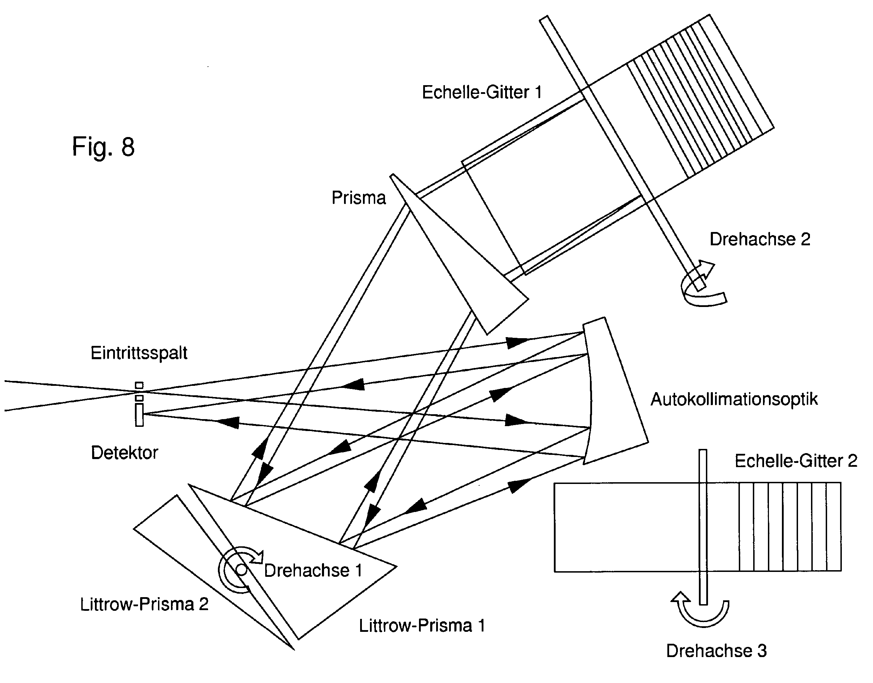

- Fig.8: zeigt die Spektrometeranordnung mit Prisma und Echelle-Gitter analog zu Figur 3, wobei ein zusätzliches Transmissionsprisma im Strahlengang zwischen dem Prisma und dem Echelle-Gitter angeordnet ist.
- Fig.9a-b: zeigen die spektrale Intensitätsverteilung einer Emissionslinie geringer Bandbreite bei etwa 500 nm für die erfindungsgemäße Anordnung für den Fall einer hohen spektralen Auflösung bei kleinem Eintrittsspalt.
- Fig.10a-b: illustrieren die Auswirkungen für den Fall eines hohen Lichtleitwertes bei großem Eintrittsspalt.
- Fig.11: veranschaulicht qualitativ die simultan gemessene Intensitätsverteilung eines Linienspektrums auf einem Flächendetektor für eine Spektrometeranordnung entsprechend den Figuren 1-5 und 8 für eine Lichtquelle.
- Fig.12: veranschaulicht qualitativ die simultan gemessene Intensitätsverteilung eines Linienspektrums auf einem Flächendetektor für eine Spektrometeranordnung entsprechend den Figuren 6 oder 7.
- Fig.13: zeigt die simultan gemessene spektrale Intensitätsverteilung von beispielhaften Linienspektren, die von fünf unterschiedlichen Lichtquellen emittiert werden.

### Beschreibung des Ausführungsbeispiels

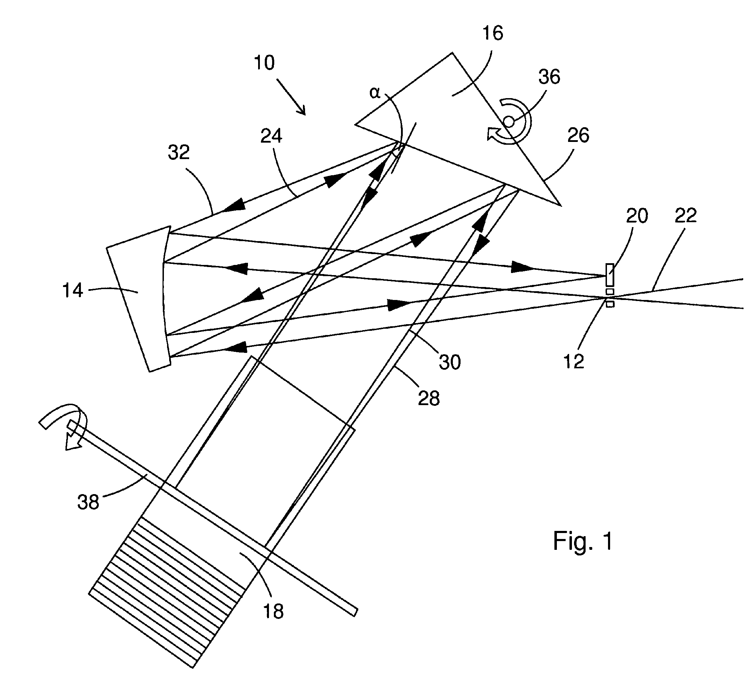

Figur 1. ist eine schematische Darstellung einer besonders einfachen Spektrometeranordnung, die allgemein mit 10 bezeichnet ist. Die Spektrometeranordnung 10 umfasst einen Eintrittsspalt 12, einen off-axis-Paraboloid als Kollimatorspiegel 14, ein rückseitig verspiegeltes Prisma 16 und ein Echelle-Gitter 18. In der Austrittsebene der Spektrometeranordnung 10 ist ein Detektor 20 zur Aufnahme der erzeugten Spektren vorgesehen. Die Dachkante des Prismas 16 verläuft senkrecht zur Darstellungsebene. Die Gitterstriche des Echelle-Gitters 18 verlaufen in der Darstellungsebene.

Die Spektrometeranordnung 10 umfasst neben den oben genannten optischen Bauteilen weitere Komponenten, wie ein Gehäuse, eine Grundplatte, Befestigungs- und Justagemittel, mechanische Antriebe und elektrische Komponenten zur Steuerung der optischen Bauteile und zur Aufnahme und Auswertung der Signale am Detektor 20, die hier der Einfachheit halber nicht dargestellt sind.

Strahlung aus einer Strahlungsquelle, welche durch den Eintrittsspalt 12 in die Spektrometeranordnung 10 eintritt, ist durch ihre Randstrahlen 22 repräsentiert. Die Strahlung 22 wird am Kollimatorspiegel 14 zu einem parallelen Bündel 24 kollimiert. Das parallele Bündel 24 trifft unter einem Einfallswinkel α auf das Prisma 16 und wird dort in der Darstellungsebene in einer Querdispersionsrichtung dispergiert. Das Bündel läuft im Prisma 16 bis zur verspiegelten Rückseite 26. Dort wird es reflektiert und läuft zurück erneut durch das Prisma. Der Einfallswinkel α ist so gewählt, dass das einfallende Bündel 24 von dem reflektierten Bündel 28 gut getrennt ist. Das reflektierte, parallele Bündel 28 fällt auf das Echelle-Gitter 18. Dort wird es in Hauptdispersionsrichtung aus der Darstellungsebene heraus dispergiert.

Das Echelle-Gitter 18 ist derart positioniert, dass die Strahlung, weiterhin als paralleles Bündel 30 um einen sehr geringen Winkel versetzt zurück zum Prisma 16 läuft. Dort wird es erneut in Querdispersionsrichtung dispergiert, reflektiert und ein weiteres Mal dispergiert. Das weiterhin parallele Bündel 32 wird anschließend am off-axis-Spiegel 14, der diesmal die Kamera bildet, in der Austrittsebene mit dem Detektor 20 fokussiert.

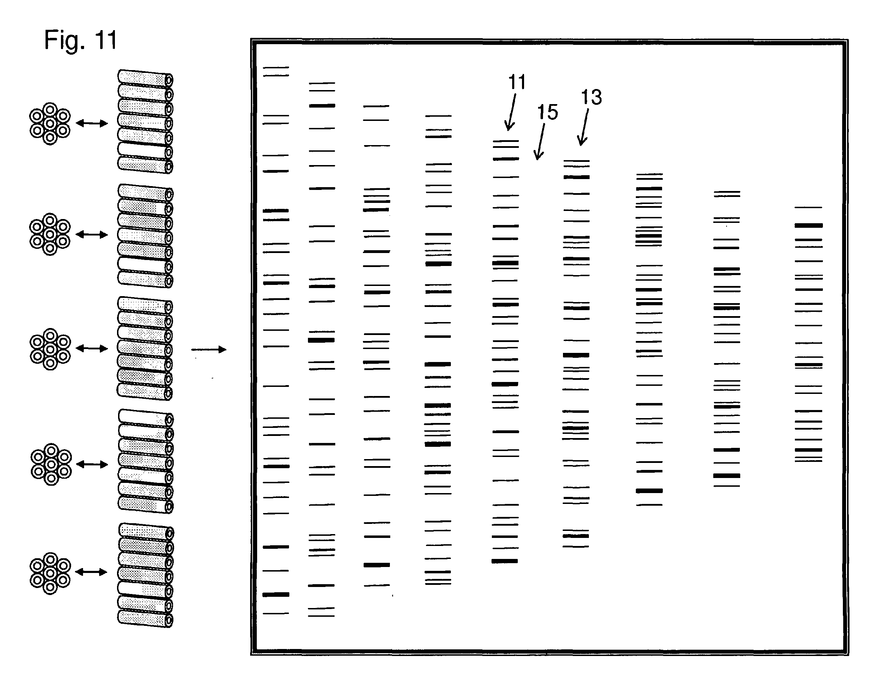

In der Austrittsebene verlaufen die vom Echelle-Gitter erzeugten Ordnungen senkrecht zur Darstellungsebene. Durch die Querdispersion am Prisma 16 haben diese einen vergleichsweise großen Abstand zueinander, so dass die Eintrittsspalthöhe in Querdispersionsrichtung - in Figur 1 entspricht dies der Breite in der Darstellungsebene-ebenfalls vergleichsweise groß gewählt werden kann, ohne dass die Ordnungen überlappen. Auf diese Weise kann ein besonders hoher Lichtleitwert realisiert werden. Figur 11 zeigt ein Beispiel für die so erzeugte zweidimensionale Intensitätsverteilung eines Linienstrahlers in der Austrittsebene des Spektrometers bei Beleuchtung mit einer Einzel-Lichtleitfaser. Die Ordnungen 11, 13 etc. verlaufen senkrecht in der Darstellung. Mehrere Ordnungen liegen nebeneinander. Der Abstand 15 zwischen den Ordnungen nimmt entsprechend des Dispersionsverlaufs des Prismas zum kurzwelligen Wellenlängenbereich (rechts in der Darstellung) hin zu. Innerhalb jeder Ordnung sind eine Vielzahl von Linien spektral getrennt. Die Trennung erfolgt in vertikaler Richtung in der Darstellung. Bei Linienstrahlern, wie dies bei Multielement-Atomemissionsspektroskopie häufig der Fall ist, kann eine Konfiguration gewählt werden, die einen Ordnungsüberlapp erlaubt, solange die einzelnen Linien nicht überlappen.

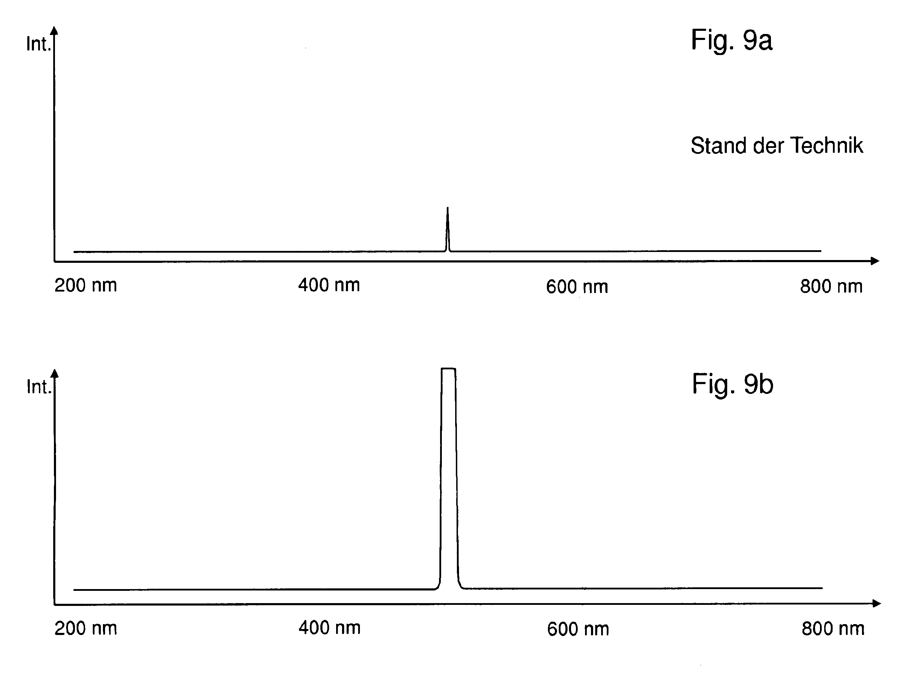

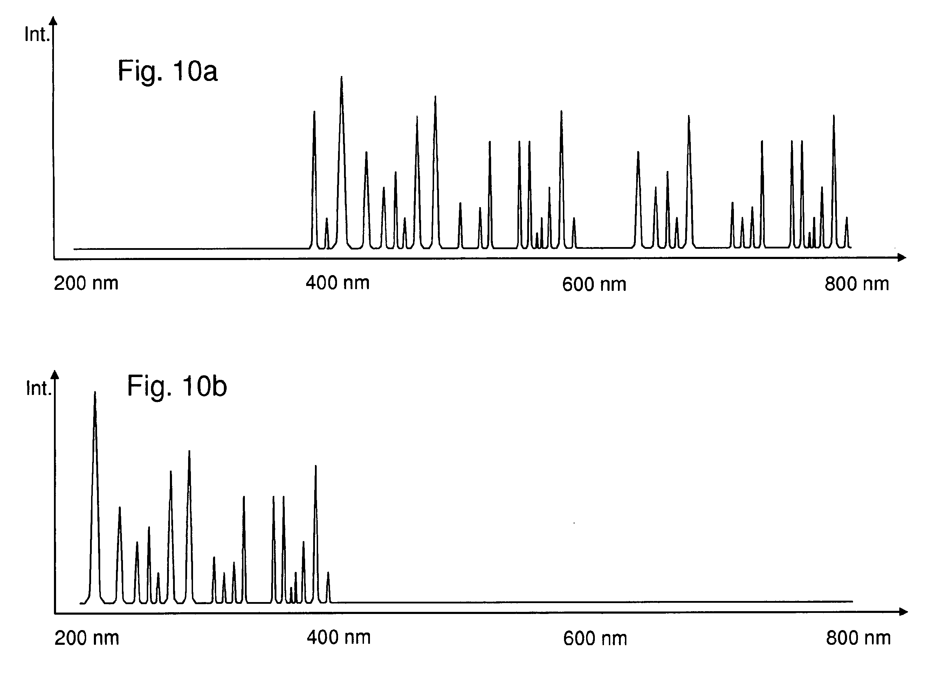

Jedem Ort x,y in der Austrittsebene entspricht eine Wellenlänge. Figur 10 zeigt den Intentsitätsverlauf aufgetragen über die Wellenlänge, der durch geeignete Auswertung erzeugt wurde. Man erkennt, dass die Linien entsprechend der hohen Auflösung des Echelle-Gitters gut voneinander getrennt sind. Die hohe Intensität der Spektrallinien wird unter anderem durch den hohen Lichtleitwert der Anordnung bewirkt. Ein Vergleich ist in Figur 9 dargestellt. Figur 9a zeigt eine Spektrallinie, die mit einer Echelle-Spektrometeranordnung nach dem Stand der Technik erzeugt wurde. Die Spalthöhe ist bei dieser Linie zur Vermeidung von Ordnungsüberlapp wesentlich kleiner als bei der gleichen Spektrallinie, die in Figur 9b dargestellt ist. Die Spektrallinie in Figur 9b entspricht der Intensitätsverteilung bei Verwendung der erfindungsgemäßen Anordnung im Monochromator/Polychromator-Fall bei extrem großer Querdispersion und großer Eitrittsspalt-Öffnung in beiden Dimensionen.

Das Prisma 16 ist auf einem um eine senkrecht zur Darstellungsebene verlaufende Achse 36 drehbaren Tisch montiert. Dies ist in Figur 1 dargestellt. Die Achse 36 wird von einem ansteuerbaren Motor angetrieben. Durch Drehung des Prismas 16 können die Ordnungen in Querdispensionsrichtung verschoben werden. Dann kann als Beispiel im Monochromatorbetrieb eine ausgewählte Ordnung auf einer Detekterzeile detektiert werden.

Das Echelle-Gitter 18 ist um eine Achse 38 parallel zur Darstellungsebene drehbar gelagert. Durch Drehung dieser Achse mittels eines ansteuerbaren Motors kann eine ausgewählte Wellenlänge einer ausgewählten Ordung auf ein ausgewähltes Detektorelement verschoben werden.

Die beschriebene Anordnung erfordert nur sehr wenige optische Bauteile. Dies ermöglicht die Erzeugung eines Spektrums mit geringen Reflexions- und Transmissionsverlusten. Die Anordnung ist kostengünstig und leicht zu justieren. Da fast alle Bauteile von einem parallelen Bündel durchlaufen werden, sind die Abbildungsfehler sehr gering. Das erhöht das Auflösungsvermögen der Anordnung. Zusätzlich zu den geringen Verlusten an den Bauteilen und den geringen Abbildungsfehlern wird der Lichtleitwert erhöht, indem mehrfach querdispergiert wird. Dies ermöglicht insbesondere im Monochromator-Fall eine große Spalthöhe in Querdispersionsrichtung. Die Anordnung ist zudem besonders kompakt und erreicht hohe Auflösungen bei geringen Abmessungen.

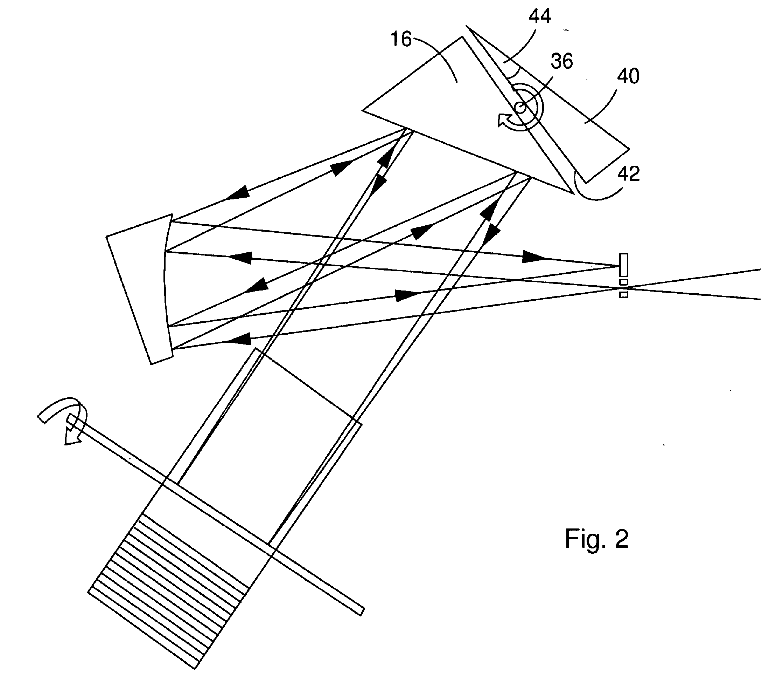

Figur 2 zeigt eine weitere Ausgestaltung des Ausführungsbeispiels aus Figur 1. Die Anordnung ist prinzipiell gleich aufgebaut, wie das oben beschriebene Ausführungsbeispiel. Zusätzlich zum Prisma 16 ist ein weiteres Prisma 40 auf dem Drehtisch montiert. Die Dachkante des Prismas 40 verläuft parallel zur Dachkante des Prismas 16. Die dem Prisma 16 zugewandte Rückseite 42 des zusätzlichen Prismas 40 ist ebenfalls verspiegelt. Das Prisma 40 hat einen kleineren Prismenwinkel 44 als das Prisma 16. Wenn die Anwendung nun eine geringere Querdispersion erfordert, kann die Prismenanordnung mit den Prismen 16 und 40 auf dem Drehtisch um die Achse 36 um einen Winkel von etwa 180° gedreht werden. Dann ist das Prisma 40 aktiv. Eine kleinere Querdispersion ist beispielsweise sinnvoll, wenn in einem Bereich mit kürzeren Wellenlängen gemessen wird, wo die Prismendispersion besonders groß ist. Dann werden die Ordnungen nicht weiter auseinandergezogen als der Detektor es zulässt. Statt eines unterschiedlichen Prismenwinkels kann je nach Anwendung auch ein Prisma aus unterschiedlichem Material mit anderen Transmissions- und Brechungseigenschaften verwendet werden.

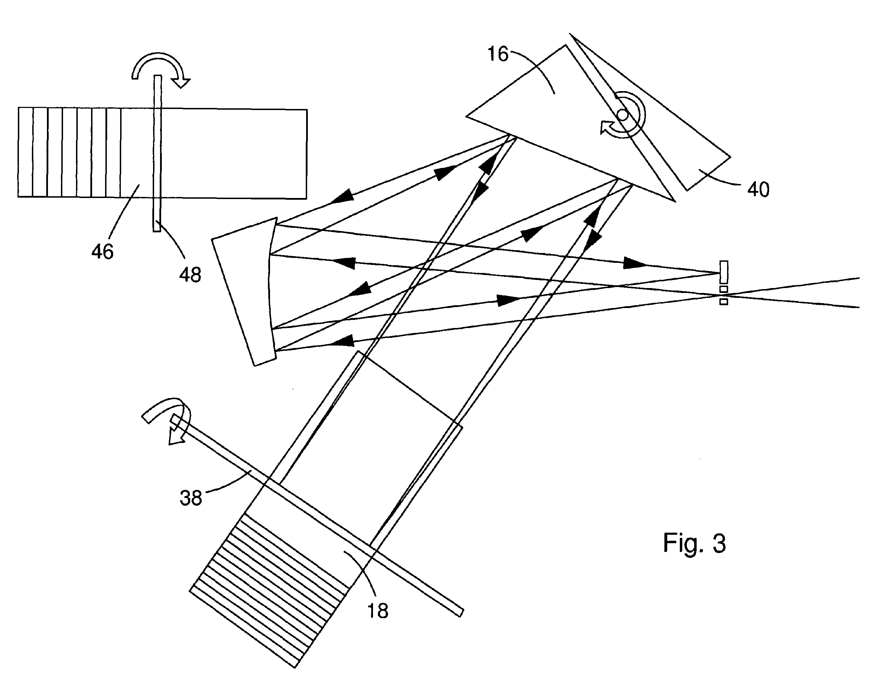

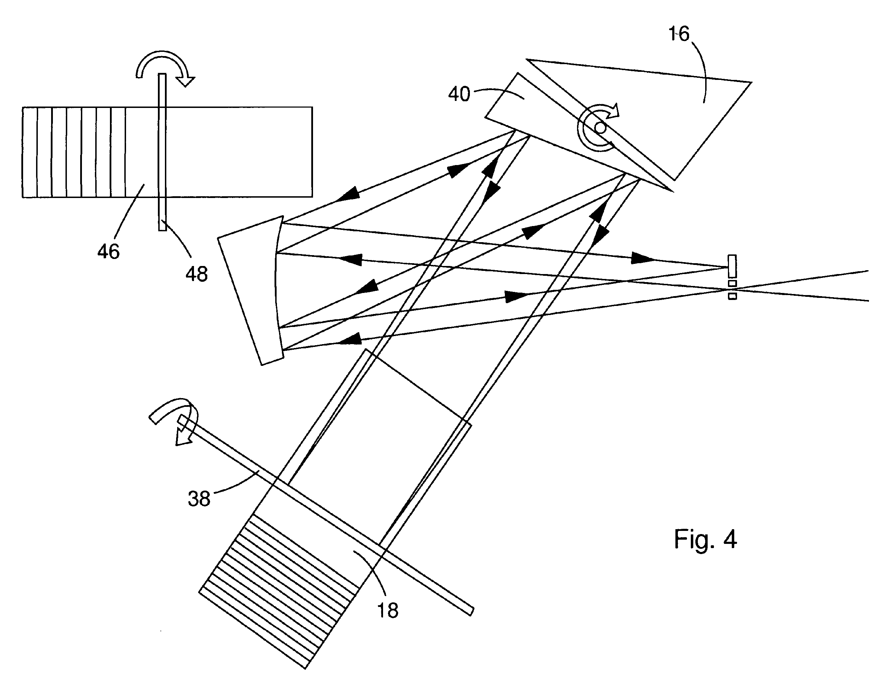

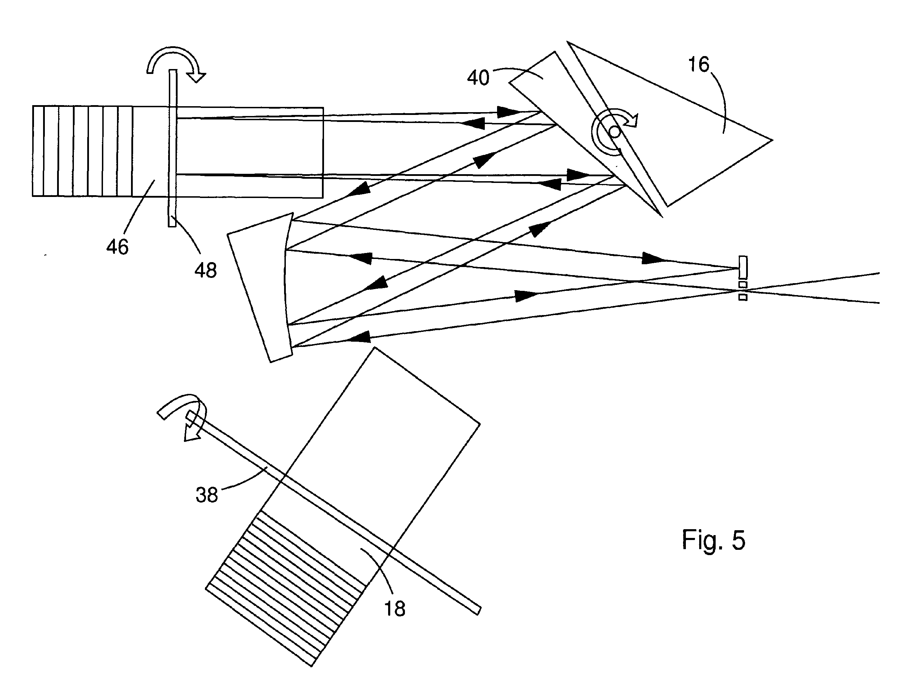

Figuren 3 bis 5 zeigen eine weitere Ausgestaltung der Ausführungsbeispiele aus Figur 1 und 2. Unabhängig davon, ob ein oder zwei Prismen vorgesehen sind, kann ein weiteres Echelle-Gitter 46 vorgegehen sein, das andere Eigenschaften, beispielsweise eine andere Strichzahl oder einen anderen Blaze-Winkel aufweist. Auch hier erfolgt die Auswahl des Echelle-Gitters nach Maßgabe des gewünschten Effektes für die jeweilige Anwendung. Die Auswahl des Echelle-Gitters 18 oder 46 erfolgt durch einfache Drehung des Prismas. Die Darstellung in Figur 3 zeigt die Anordnung, bei welcher das Prisma mit dem großen Prismenwinkel und das Echelle-Gitter 18 ausgewählt wurden. Die Darstellung in Figur 4 zeigt die Anordnung, bei welcher das Prisma mit einem kleineren Prismenwinkel und das Echelle-Gitter 18 ausgewählt wurden. Die Darstellung in Figur 5 zeigt die Anordnung, bei welcher das Prisma mit dem kleineren Prismenwinkel und das Echelle-Gitter 46 ausgewählt wurden.

Figur 10 zeigt beispielhaft die Auswirkungen eines Wechsels des Echelle-Gitters. Das Echelle-Gitter 18 hat eine geringere Gitterkonstante als das Echelle-Gitter 46. Es ist im vorliegenden Ausführungsbeispiel besonders gut für den kurzwelligen Bereich unterhalb von 400 nm geeignet. Dieses Echelle-Gitter 18 wird mit einem Prisma aus mit vergleichsweise großem Prismenwinkel verwendet, wie dies in Figur 2 dargestellt ist. Kalziumfluorid besitzt für den Wellenlängenbereich unterhalb von 400 nm eine hohe Transmission. Der große Prismenwinkel bewirkt eine hohe Querdispersion. Die Anordnung aus Figur 2 ist daher für den kurzwelligen Bereich optimiert, wie dies in Figur 10b dargestellt ist. Das in Figur 10a schematisch dargestellte Spektrum wird durch eine Konfiguration erzeugt, die ein Prisma mit einem geringeren Prismenwinkel bei Verwendung eines Flintglases aufweist. Dieses Material ist für den Bereich oberhalb 400 nm besonders geeignet. Eine solche Konfiguration ist in Figur 4 und 5 dargestellt.

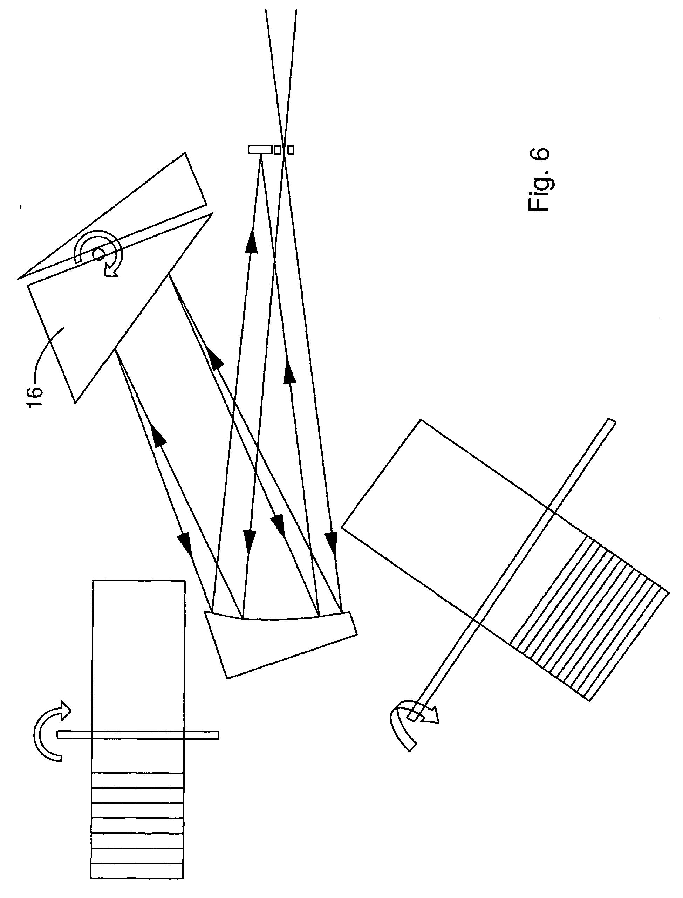

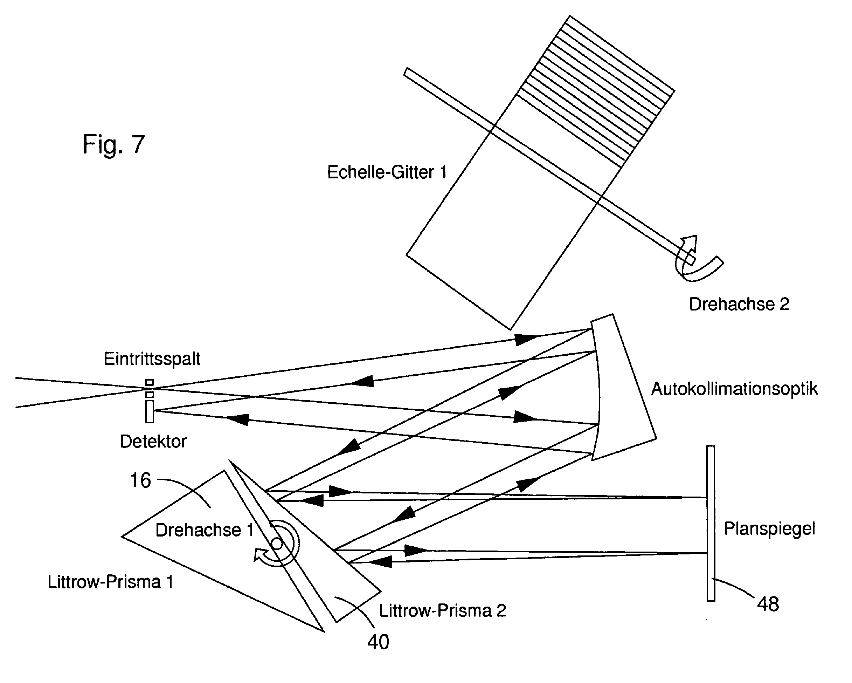

Figur 6 und 7 zeigen Konfigurationen, welche zusätzlich sinnvoll sein können. Das Prisma 16 bzw. 46 wird gerade so eingestellt, dass die Strahlung überhaupt nicht auf ein Echelle-Gitter fällt. Dann wird am Detektor lediglich ein lineares Übersichtsspektrum geringer Auflösung erzeugt. Je nach gewünschter Dispersion, kann die Strahlung direkt zum Eintrittsspalt zurückreflektiert werden (Figur 6) oder in Richtung auf einen Planspiegel 48 (Figur 7). Die Strahlung wird an dem Planspiegel 48 in Autokollimation zurückreflektiert und läuft erneut über das Prisma 46.

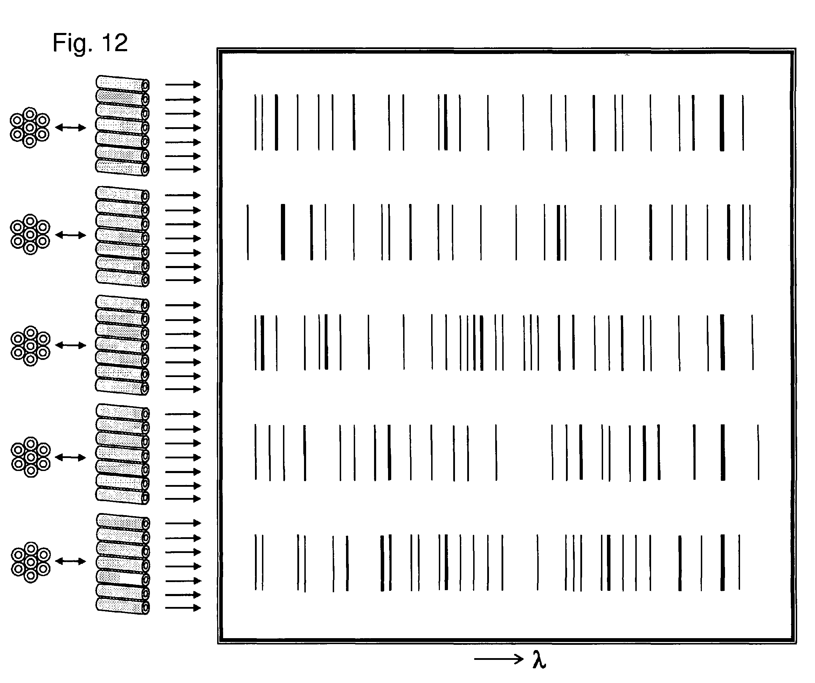

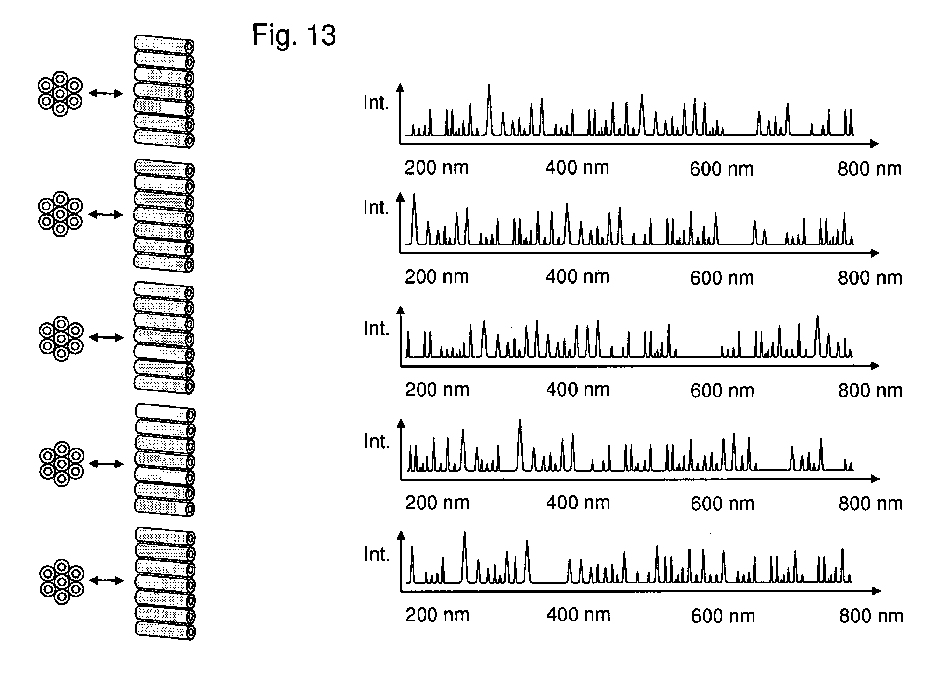

Mit den Anordnungen aus Figur 6 und 7 wird eine eindimensionale Intensitätsverteilung erzeugt, wie es beispielhaft in Figur 12 dargestellt ist. Figur 12 zeigt fünf Spektren aus unterschiedlichen Strahlungsquellen. Die zugehörigen Spektren sind in Figur 13 dargestellt. Man erkennt, dass sich das hochauflösende Echelle-Spektrometer mit einer zweidimensionalen Intensitätsverteilung in ein niedrig-auflösendes Prismenspektrometer mit eindimensionaler Dispersion umschalten lässt, mit dem eine Übersicht über die spektrale Intensitätsverteilung einer Strahlungsquelle erhalten werden kann. Die Verwendung eines Flächendetektors in der Austrittsebene erlaubt die Nutzung der nichtverwendeten Dimension für verschiedene Zwecke. So kann die spektrale Intensitätsverteilung unterschiedlicher Lichtquellen vorzugsweise durch die Verwendung von Lichtleitern verglichen werden, wie dies in Figur 12 und 13 angedeutet ist Es können aber auch das ortsaufgelöste Spektrum einer Lichtquelle gemessen werden. Schließlich können die Detektorelemente über die Spalthöhe gebinnt werden, wodurch ein besonders hoher Lichtleitwert erreicht wird.

Die Variationsvielfalt der Anordnung mit zwei oder mehreren Echelle-Gittern und verschiedenen Prismen erschließt sich dem Fachmann, ohne dass hier alle Variationen dargestellt werden müssen. Es ist ein wesentliches Merkmal aller Konfigurationen, dass diese durch bloße Drehung des Prismentisches um die Achse 36 erreichbar sind. Ein aufwändiges Austauschen von Komponenten und Translationsbewegungen sind nicht erforderlich. In jedem Fall wird eine besonders hohe Abbildungsqualität bei hohem Lichtleitwert und hoher Auflösung sowie geringen Kosten und Baumaßen erreicht. Es sind aber in bestimmten Anwendungsfällen auch weitere parallel zur Achse 36 verlaufende Achsen zur Drehung einzelner Komponenten der Dispersionsanordnung möglich und sinnvoll.

## Patentansprüche

1. Spektrometeranordnung (10) enthaltend:
(a) eine Kollimatoroptik zur Erzeugung eines parallelen Strahlenbündels aus der in die Spektrometeranordnung eintretenden Strahlung,
(b) eine Dispersionsanordnung (16; 40) zur Dispersion eines aus der in die Spektrometeranordnung eintretenden Strahlung erzeugten parallelen Strahlenbündels in einer Querdispersionsrichtung,
(c) ein Echelle-Gitter (18; 46) zur Dispersion der in die Spektrometeranordnung (10) eintretenden Strahlung in einer Hauptdispersionsrichtung, und
wobei
(d) die Dispersionsanordnung (16; 40) reflektierend ausgebildet ist, und
(e) die Dispersionsanordnung (16; 40) entlang des optischen Weges vor dem Echelle-Gitter (18; 46) derart angeordnet ist, dass das parallele Strahlenbündel in Richtung auf das Echelle-Gitter reflektiert wird
**dadurch gekennzeichnet, dass**
(f) das Echelle-Gitter (18; 46) derart angeordnet ist, dass die dispergierte Strahlung zurück in Richtung auf die Dispersionsanordnung (16; 40) reflektiert wird und die Dispersionsanordnung ein weiteres Mal durchläuft, und
(g) die Kollimatoroptik das reflektierte und dispergierte parallele Strahlenbündel fokussiert.

2. Spektrometeranordnung (10) nach einem der vorgehenden Ansprüche, **dadurch gekennzeichnet, dass** ein weiteres Echelle-Gitter (46) vorgesehen ist und die Dispersionsanordnung (16; 40) von einer ersten in eine zweite Stellung bewegbar ist, denen jeweils ein Echelle-Gitter (18; 46) zugeordnet ist, in dessen Richtung die Strahlung reflektiert wird.

3. Spektrometeranordnung (10) nach einem der vorgehenden Anspruch, **dadurch gekennzeichnet, dass** die Dispersionsanordnung (16; 40) ein auf der Rückseite verspiegeltes Prisma (16) umfasst, das zusammen mit mindestens einem weiteren, auf der Rückseite verspiegelten Prisma (40) auf einem Drehtisch montiert ist, so dass durch Drehen des Drehtisches eines der Prismen auswählbar ist.

4. Spektrometeranordnung (10) nach einem der vorgehenden Ansprüche, **dadurch gekennzeichnet, dass** zusätzlich zur Dispersionsanordnung (16; 40) ein Prisma im Strahlengang angeordnet ist.

5. Spektrometeranordnung (10) nach einem der vorgehenden Ansprüche, **dadurch gekennzeichnet, dass** die Strahlung um einen geringen Winkel aus der Hauptebene heraus abgelenkt wird.

6. Verfahren zur spektralen Zerlegung von Strahlung, mit den Schritten:
(a) Erzeugen eines parallelen Strahlenbündels (24) mit einer Kollimatoroptik;
(b) Dispergieren der Strahlung an einem Echelle-Gitter (18; 46) in einer Hauptdispersionsrichtung; und
(c) Dispergieren der parallelen Strahlung an einer Dispersionsanordnung (16; 40) in einer Querdispersionsrichtung;
(d) wobei das parallele Strahlenbündel (24) durch die Dispersionsanordnung (16; 40) in Richtung auf das Echelle-Gitter (18; 46) reflektiert wird und die Dispersionsanordnung ein weiteres Mal durchläuft,
**dadurch gekennzeichnet, dass**
(e) die dispergierte Strahlung (28) vom Echelle-Gitter (18; 46) zurück in Richtung auf die Dispersionsanordnung (16; 40) reflektiert wird, und
(f) die dispergierte und reflektierte Strahlung mit der gleichen Kollimatoroptik fokussiert wird.

## Claims

1. Spectrometer assembly (10), comprising:
(a) a collimating optical assembly for generating a parallel radiation bundle from radiation entering the spectrometer assembly,
(b) a dispersion assembly (16; 40) for dispersing the parallel radiation bundle generated from the radiation entering the spectrometer assembly in a lateral dispersion direction,
(c) an Echelle grating (18; 46) for dispersing radiation entering the spectrometer assembly (10) in a main dispersion direction, wherein
(d) the dispersion assembly (16; 40) is reflective, and
(e) the dispersion assembly (16;40) is arranged in such a way along the optical path before the Echelle grating (18; 46) that the parallel radiation bundle is reflected in the direction of the Echelle grating
**characterized in that**
(f) the Echelle grating (18; 46) is arranged in such a way that the dispersed radiation is reflected back to the dispersion assembly (16; 40) and passes the dispersion assembly once more, and
(g) the collimating optical assembly focusses the reflected and dispersed parallel radiation bundle.

2. Spectrometer assembly (10) according to any of the preceding claims, **characterized in that** a further Echelle grating (46) is provided and the dispersion assembly (16; 40) is moveable from a first to ta second position, wherein an Echelle grating is allocated to each position (18; 46) and wherein the radiation is reflected in the direction of such Echelle gratings.

3. Spectrometer assembly (10) according to any of the preceding claims, **characterized in that** the dispersion assembly (16; 40) comprises a prism (16) provided with a reflecting rear side and which is mounted on a rotatable table together with at least one further prism (40) with a reflecting rear side in such a way that one of the prisms can be selected by rotating the rotatable table.

4. Spectrometer assembly (10) according to any of the preceding claims, **characterized in that** a further prism is arranged in the radiation path in addition to the dispersion assembly (16; 40).

5. Spectrometer assembly (10) according to any of the preceding claims, **characterized in that** the radiation is deflected by a small degree from the main plane.

6. Method for spectrally dispersing radiation comprising the steps of:
(a) Generating a parallel radiation bundle (24) with a collimating optical assembly;
(b) Dispersing the radiation with an Echelle grating (18; 46) in a main dispersion direction; and
(c) Dispersing the parallel radiation with a dispersing assembly (16; 40) in a lateral dispersion direction;
(d) wherein the parallel radiation bundle (24) is reflected by the dispersing assembly (16; 40) in the direction of the Echelle-Grating (18; 46) and passes the dispersion assembly once more,
**characterized in that**
(e) the radiation (28) dispersed by the Echelle grating (18; 46) is reflected back in the direction of the dispersing assembly (16; 40) and
(f) the dispersed and reflected radiation is focussed by the same collimating optical assembly.

## Revendications

1. Disposition de spectromètre (10), comprenant
(a) un système optique collimateur destiné à générer un faisceau de rayons parallèles à partir du rayonnement entrant dans la disposition de spectromètre,
(b) une disposition de dispersion (16 ; 40) destinée à disperser, dans un sens de dispersion transversal, un faisceau de rayons parallèles généré à partir du rayonnement entrant dans la disposition de spectromètre,
(c) un réseau-échelle (18 ; 46) destiné à disperser, dans un sens de dispersion principal, le rayonnement entrant dans la disposition de spectromètre (10), et
(d) la disposition de dispersion (16 ; 40) étant configurée de manière à réfléchir, et
(e) la disposition de dispersion (16 ; 40) étant disposée le long du chemin optique en amont du réseau-échelle (18 ; 46) de telle manière que le faisceau de rayons parallèles est réfléchi en direction du réseau-échelle,
**caractérisée par**
(f) le réseau-échelle (18 ; 46) est disposé de telle manière que le rayonnement dispersé est réfléchi de manière à retourner vers la disposition de dispersion (16 ; 40) et à traverser une nouvelle fois la disposition de dispersion, et
(g) le système optique collimateur focalise le faisceau de rayons parallèles dispersés et réfléchis.

2. Disposition de spectromètre (10) selon l'une quelconque des revendications précédentes, **caractérisé en ce qu'**il est prévu un réseau-échelle supplémentaire (46) et que la disposition de dispersion (16 ; 40) peut se déplacer d'une première position dans une seconde position à chacune desquelles est attribué un réseau-échelle (18 ; 46) dans le sens duquel est réfléchi le rayonnement.

3. Disposition de spectromètre (10) selon l'une quelconque des revendications précédentes, **caractérisé en ce que** la disposition de dispersion (16 ; 40) comprend un prisme (16) réfléchissant sur sa face envers et monté avec au moins un prisme réfléchissant supplémentaire (40) sur un plateau rotatif de telle manière à pouvoir sélectionner l'un des prismes en tournant le plateau rotatif.

4. Disposition de spectromètre (10) selon l'une quelconque des revendications précédentes, **caractérisé en ce qu'**en plus de la disposition de dispersion (16 ; 40), un prisme est disposé dans la marche des rayons.

5. Disposition de spectromètre (10) selon l'une quelconque des revendications précédentes, **caractérisé en ce que** le rayonnement est dévié hors du plan principal par rapport à un angle faible.

6. Procédé pour la décomposition spectrale d'un rayonnement, comprenant les étapes de :
(a) génération d'un faisceau de rayons parallèles (24) à l'aide d'un système optique collimateur,
(b) dispersion du rayonnement sur un réseau-échelle (18 ; 46) dans un sens de dispersion principal ; et
(c) dispersion du rayonnement parallèle sur une disposition de dispersion (16 ; 40) dans un sens de dispersion transversal,
(d) le faisceau de rayons parallèles (24) étant réfléchi par la disposition de dispersion (16 ; 40) en direction du réseau-échelle (18 ; 46) et traversant une nouvelle fois la disposition de dispersion,
**caractérisé en ce que**
(e) le rayonnement dispersé (28) est réfléchi de manière à retourner du réseau-échelle (18 ; 46) vers la disposition de dispersion (16 ; 40), et
(f) le rayonnement dispersé et réfléchi est focalisé à l'aide du système optique collimateur.
